# EUROPEAN PATENT SPECIFICATION

(11) **EP 3 633 809 B1**
(45) Date of publication and mention of the grant of the patent: **15.12.2021**
(21) Application number: 19199488.8
(22) Date of filing: 25.09.2019
(51) Int. Cl.: H02G 3/04, H02G 3/06, F16B 7/04, B21D 39/06

(54) **CABLE LADDER**
KABELLEITER
ÉCHELLE À CÂBLES

(30) Priority: 02.10.2018 ES 201831499 U
(43) Date of publication of application: 08.04.2020
(73) Proprietor: Unex Aparellaje Electrico S.L., 08903 L'Hospitalet de Llobregat (Barcelona) (ES)
(72) Inventor: MOSTAZO OVIEDO, José Antonio, 08903 L'Hospitalet de Llobregat (ES)
(74) Representative: Curell Suñol S.L.P.

(56) References cited:
- EP-A1- 3 200 298
- WO-A1-99/53584
- US-A- 4 080 742

## Description

### Field of the Invention

The invention is comprised in the field of the cable ladder type cable trays which are used for guiding electric cables, fiber optic cables or cables of another type.

The invention specifically relates to cable ladders in which both the side rails and the crosspieces are profiles made of a polymeric material.

More specifically, the invention relates to a cable ladder of the type comprising two coplanar side rails joined to one another by a plurality of crosspieces spaced from one another, said plurality of crosspieces constituting a discontinuous support surface for cables, in which each of said crosspieces is a profile made of a polymeric material and each of said side rails is a profile made of a polymeric material, and wherein the ends of said crosspieces fit in an inner side of the side rails facing an inner side of the opposite side rail.

### State of the Art

Documents WO2016046436A1 and EP3200298A1 disclose cable ladders of this type, wherein the ends of the crosspieces have a specific shape for fitting directly in the inner side of the side rails. The shaping of the ends of the crosspieces is done by machining profiles obtained by extrusion. This specific shape of the ends of the crosspieces is only suitable for attaching a crosspiece to two side rails parallel to one another and orthogonal to the crosspiece, as shown in the mentioned document WO2016046436A1, or so as to form curved segments of cable trays as shown in document ES1200090U. There is a need to construct cable ladders of this type with more diverse shapes.

### Description of the Invention

The purpose of the invention is to provide a cable tray of the type indicated above, which can have more varied shapes and can be readily built.

This is achieved by means of a cable tray according to claim 1. As a result of this configuration, it is not necessary for the ends of the crosspieces to be specially formed so as to fit in the inner sides of the side rails, whereby it is not necessary to machine the ends of profiles which are obtained by extrusion to constitute the crosspieces. Furthermore, and most particularly, this configuration provides a modular system which allows readily constructing different cable ladder segments with various shapes. For example, as will be seen below in the description of embodiments, by using a single crosspiece model and different joining pieces it is possible to join the crosspieces to an orthogonal straight side rail, to a straight side rail forming an angle between the crosspiece and the side rail, and to a curved side rail. It is also possible to form attachments between crosspieces so as to create frameworks of crosspieces with different shapes. Moreover, this configuration allows constructing cable ladders in an easy manner, since the attachment of the ends of the crosspieces to the side rails or to other crosspieces is done by simple snap fitting through the joining pieces.

Different ways for snap fitting the joining piece to the ends of the crosspieces can be provided. For example, the first side of the joining piece can be formed for snap fitting with the outer surface of the crosspiece. However, in the preferred embodiments the first side of the joining piece comprises a dowel having a shape complementary to the inner perimeter of the crosspieces, such that said dowel is tightly introduced inside a crosspiece, at the end of said crosspiece and in the longitudinal direction thereof. This solution makes the cable ladder more robust and furthermore prevents the joining piece from interfering in the space surrounding the crosspieces, where the cables are laid.

In the most common configurations of known cable ladders of this type, the crosspieces comprise through holes distributed along the crosspiece. These through holes allow arranging zip ties for holding the cables laid in the cable tray. In particularly advantageous embodiments for these common configurations, the dowel comprises a tooth which is snapped into one of the through holes of the crosspiece. The joining piece is thereby fixed robustly to the end of the crosspiece, taking advantage of the presence of one of the through holes in said crosspiece.

Preferably, the dowel is formed by two facing arms extending in the longitudinal direction of said dowel and a central tab in which the tooth is arranged and extending in cantilever fashion between the two arms. This configuration of the dowel is robust and allows good elastic bending of the central tab to obtain easy snap fitting of the tooth in the through hole.

In a particular configuration of known cable ladders of this type, the crosspieces have a C-shaped cross-section with a web and two facing flanges, said flanges demarcating between them an open side of the crosspiece opposite said web. The two flanges are bent towards the inside of the crosspiece forming respective inner side tracks. The open side and the two inner side tracks form a guide along the crosspiece which is used for fixing cable holding devices, such as clamps for example provided with tightening means for holding cable bundles. These clamps are described for example in document ES1164633U. In particularly advantageous embodiments for this crosspiece configuration, each of the arms of the first side of the joining piece comprises a rib protruding laterally from the arm, said ribs being formed such that they are tightly introduced in the inner side tracks. The joining piece is thereby fixed to the crosspiece in a particularly robust manner and the operation of introducing the dowel in the crosspiece is even further facilitated.

In some embodiments, the second side of the joining piece is formed for snap fitting in the inner side of a side rail in an orthogonal direction with respect to the longitudinal direction of said side rail, such that through said joining piece is joined by snap fitting the end of a crosspiece to the inner side of a side rail. These embodiments allow assembling cable ladders with the same shape as in the prior art, with the difference that the attachment of the end of the crosspiece with the side rail is not done by direct fitting but rather through the joining piece. Advantageously, the end of the side rail does not need to be machined to be fitted in the inner side of the side rail, but rather the joining piece is formed for that purpose. Another advantage of this system according to the invention is that it allows sending a half-assembled cable ladder to the site where it is to be installed, with the joining pieces fitted in the inner sides of the side rails but with the crosspieces not being assembled, subsequently saving in transport volumes. The end user can assemble the cable ladder on site in an easy manner and without requiring any particular machinery or skill. To that end, the end user must simply fit the ends of the crosspieces in the joining pieces which have been previously fitted in the side rails before transport.

In a particular configuration of known cable ladders of this type, the inner side of the side rails comprises a channel and a plurality of openings spaced apart from one another along the longitudinal direction of said side rails. In particularly advantageous embodiments for this side rail configuration, the second side of the joining piece comprises a block having on its outer surface at least one transverse groove, said block being formed such that it is introduced under pressure in said channel through one of said openings, and said channel comprises a projection which is introduced in said transverse groove of the block. These embodiments allow assembling cable ladders with side rails of this type and with the same shape as in the prior art, with the difference that the attachment of the end of the crosspiece with the side rail is not done by direct fitting but rather through the joining piece.

Preferably, the block comprises two of said transverse grooves, arranged in one and the same plane on opposite sides of said block. This configuration allows interchangeably arranging the crosspiece in two positions that are turned over with respect to one another, such that the projection of the channel is introduced in either of said transverse grooves.

In some embodiments, the first side of the joining piece is formed for snap fitting in the ends of two crosspieces arranged coplanar and forming an angle with respect to one another. This allows forming a framework of crosspieces in which some crosspieces are not orthogonal to the side rails, which facilitates the construction of cable ladder segments with more complex shapes, particularly bypass segments.

Preferably, the first side of the joining piece comprises two dowels forming an angle with respect to one another, each of said dowels having a shape complementary to the inner perimeter of a crosspiece, such that each of said dowels is tightly introduced inside a crosspiece, at the end of said crosspiece and in the longitudinal direction thereof. This solution makes the cable ladder more robust and furthermore prevents the joining piece from interfering in the space surrounding the crosspieces, where the cables are laid.

In some embodiments, each of said first side and second side of the joining piece is formed for snap fitting in the end of a crosspiece, such that through said joining piece the ends of two of said crosspieces aligned with one another are joined by fitting. This allows increasing the effective length of the crosspieces, as there is provided a composite crosspiece formed by two aligned crosspieces, which facilitates the construction of cable ladder segments with more varied shapes and dimensions.

Preferably, each of said first side and second side of the joining piece comprises a dowel having a shape complementary to the inner perimeter of the crosspieces, such that said dowel is tightly introduced inside a crosspiece, at the end of said crosspiece and in the longitudinal direction thereof, and said joining piece comprises a partition arranged between the two dowels of the first side and of the second side, said partition protruding from the perimeter of said two dowels. This solution makes the cable ladder more robust and furthermore prevents the joining piece from interfering in the space where the cables are laid. The partition acts as a stop for assuring correct positioning of the dowels in the crosspieces.

Preferably, for the purpose of facilitating assembly, the first side and second side of the joining piece are equal to one another.

In some embodiments, the second side of the joining piece is formed for snap fitting in a crosspiece in an orthogonal direction with respect to the longitudinal direction of said crosspiece, such that through said joining piece the end of a first crosspiece is joined to a central segment of a second crosspiece arranged orthogonally to said first crosspiece by fitting. This allows forming a framework of crosspieces in which some crosspieces are orthogonal and joined to one another, which facilitates the construction of cable ladder segments with more complex shapes, particularly bypass segments.

Preferably, for the purpose of facilitating assembly, the second side of the joining piece comprises a grip encircling the outer surface of the second crosspiece. The grip is formed by a bent plate which is adjoined to said outer surface of the second crosspiece, whereby the second side of the joining piece virtually does not interfere in the space around the crosspieces and does not form projections on which the cables may accidentally be snagged.

### Brief Description of the Drawings

Figure 1 is a perspective view of the cable ladder according to a first possible embodiment, in which the cable ladder is straight and all the crosspieces are orthogonal to the side rails and joined at their two ends through a first joining piece.
Figure 2 is an exploded view corresponding to Figure 1.
Figure 3 is a partial perspective view of one of the side rails.
Figure 4 is an enlarged detail view of the attachment area for attaching one end of a crosspiece to a side rail through the first joining piece.
Figures 5, 6, 7, 8, and 9 are, respectively, a top perspective view, a bottom perspective view, a front view, a top view, and a bottom view of one of the crosspieces.
Figures 10, 11, and 12 are, respectively, a top perspective view, a top perspective view turned 90°, and a bottom perspective view of the first joining piece.
Figures 13, 14, and 15 are, respectively, a top perspective view, a bottom perspective view, and a front view of a first joining piece snap fit in an end of a crosspiece.
Figure 16 is an exploded perspective view showing a second embodiment in which two aligned crosspieces are joined to one another at their ends through a second joining piece.
Figure 17 is a perspective view corresponding to Figure 16 with the parts fitted together.
Figures 18 and 19 are, respectively, a top perspective view and a bottom perspective view of the second joining piece.
Figure 20 is an exploded perspective view showing a third embodiment in which two orthogonal crosspieces are joined to one another through a third joining piece.
Figure 21 is a perspective view corresponding to Figure 20 with the parts fitted together.
Figure 22 is a perspective view corresponding to Figure 21 from behind.
Figures 23 and 24 are, respectively, a top perspective view and a side view of the third joining piece.
Figure 25 is an exploded perspective view showing a fourth embodiment in which two crosspieces forming an angle are joined to a straight side rail at one and the same point through a fourth joining piece.
Figure 26 is a perspective view corresponding to Figure 25 with the parts fitted together.
Figure 27 is an exploded perspective view showing a variant of the fourth embodiment in which two crosspieces forming an angle are joined to a curved side rail at one and the same point through the fourth joining piece.
Figure 28 is a perspective view corresponding to Figure 25 with the parts fitted together.
Figures 29, 30, and 31 are, respectively, a top perspective view, a turned top perspective view, and a bottom perspective view of the fourth joining piece.
Figure 32 is a perspective view of one of the cable ladder variants that can be constructed with the system of the invention, which in this case consists of a T-joint.
Figure 33 is a perspective view of another one of the cable ladder variants that can be constructed with the system of the invention, which in this case consists of an X-crossing.

### Detailed Description of Embodiments of the Invention

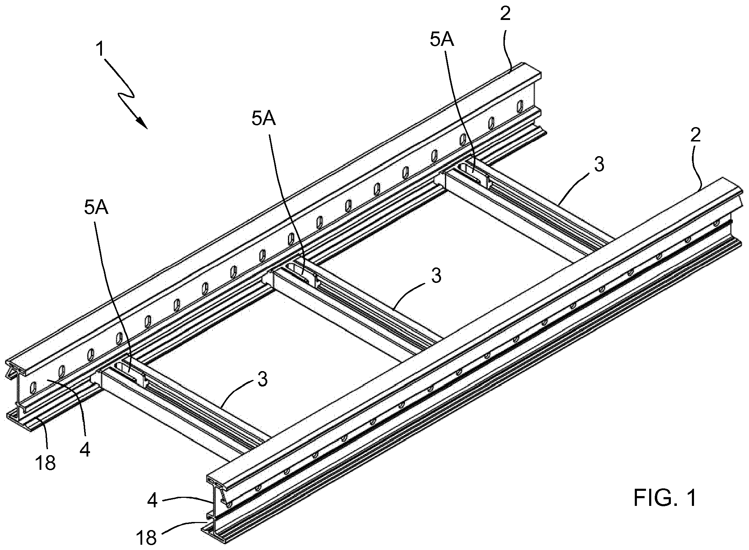

Figures 1 to 15 show a first embodiment in which the cable ladder is straight, with the side rails parallel to one another and the crosspieces arranged orthogonally to said side rails and joined thereto at their ends.

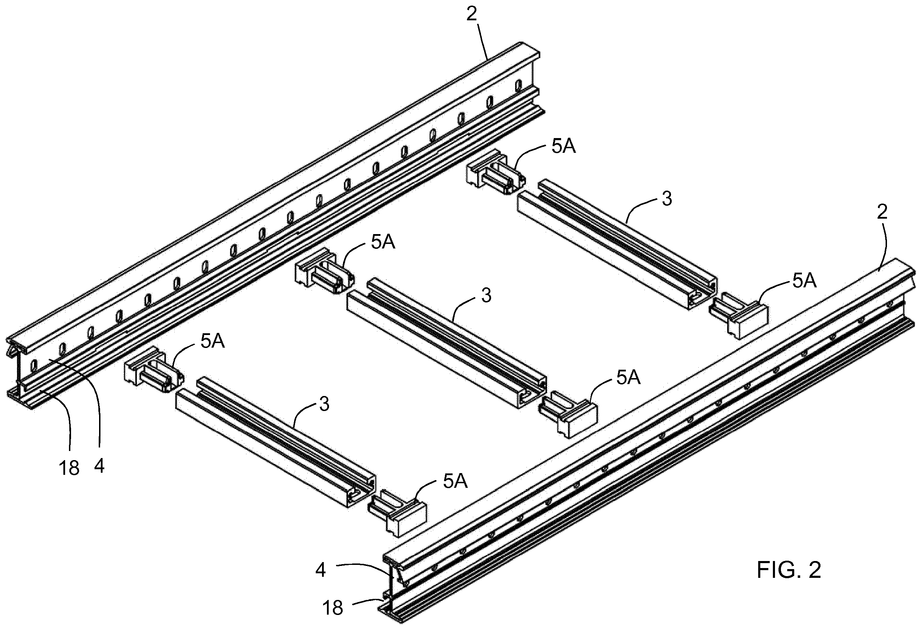

As can be seen in Figures 1 and 2, the cable ladder 1 comprises two coplanar side rails 2 joined to one another by a plurality of crosspieces 3 spaced from one another. The set of these crosspieces 3 constitutes a discontinuous support surface for cables.

The ends of said crosspieces 3 fit in an inner side 4 of the side rails 2 facing an inner side 4 of the opposite side rail 2.

The cable ladder 1 according to the invention has the particularity that the ends of the crosspieces 3 are joined by fitting in the inner side 4 of the side rails through an interposed joining piece. In the first embodiment depicted in Figures 1 to 15, this joining piece is a first joining piece 5A formed specifically for attaching an end of a crosspiece 3 to the inner side 4 of a side rail 2 arranged perpendicular to said crosspiece 3.

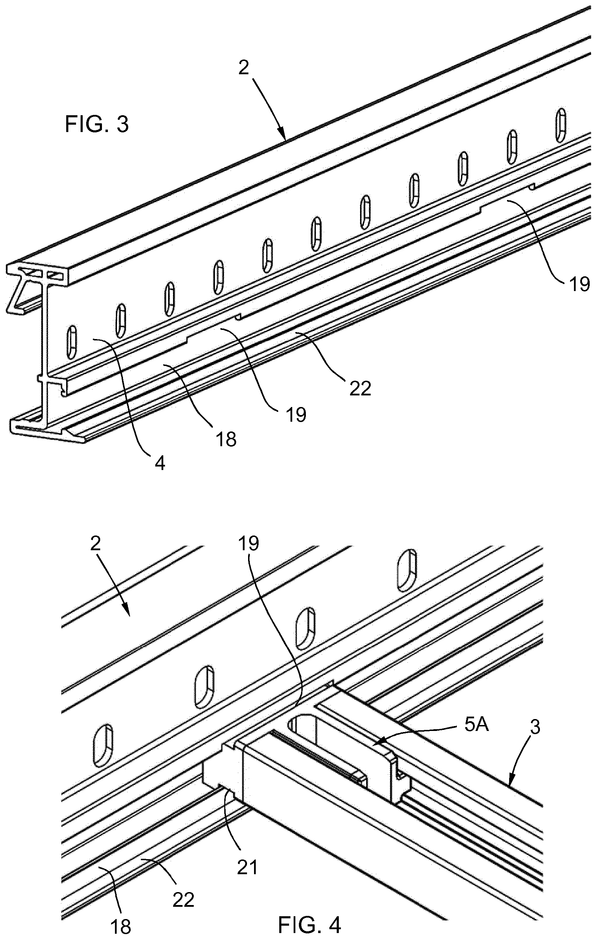

Figure 3 shows in greater detail the shape of the side rails 2. The inner side 4 of the side rail 2 comprises a channel 18 and a plurality of openings 19 spaced apart from one another along the longitudinal direction of the side rail 2. This shape of the side rails 2 is known in the state of the art. The invention has the particularity that it allows the ends of the crosspieces 3 to snap fit in the inner side 4 of the side rails 2 through a joining piece that is snap fit in both parts, instead of doing it directly like in the prior art.

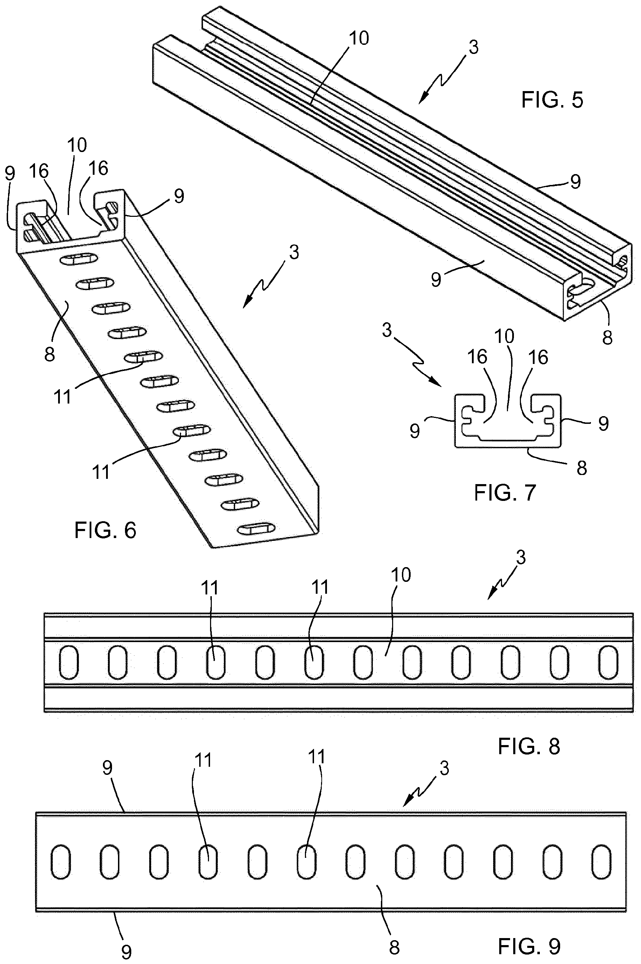

Figures 5 to 9 show in greater detail the shape of the crosspieces 3. Each crosspiece 3 has a C-shaped cross-section with a web 8 and two facing flanges 9. In the web 8 are formed through holes 11 regularly distributed along the crosspiece 3. The flanges 9 demarcate between them an open side 10 of the crosspiece 3, opposite said web 8, and are bent towards the inside of the crosspiece 3 forming respective inner side tracks 16. This shape of the crosspieces 3 is known in the state of the art. The invention has the particularity that it allows the ends of the crosspieces 3 to snap fit in another element of the cable ladder through a joining piece snap fit in both parts, whereby it is no longer necessary for the ends of the crosspieces 3 to be machined with a specific shape for fitting in said element. The crosspiece 3 shown in Figures 5 to 9 is a profile obtained by extrusion in which have been machined the through holes 11, but no specific shape has been machined at the ends thereof.

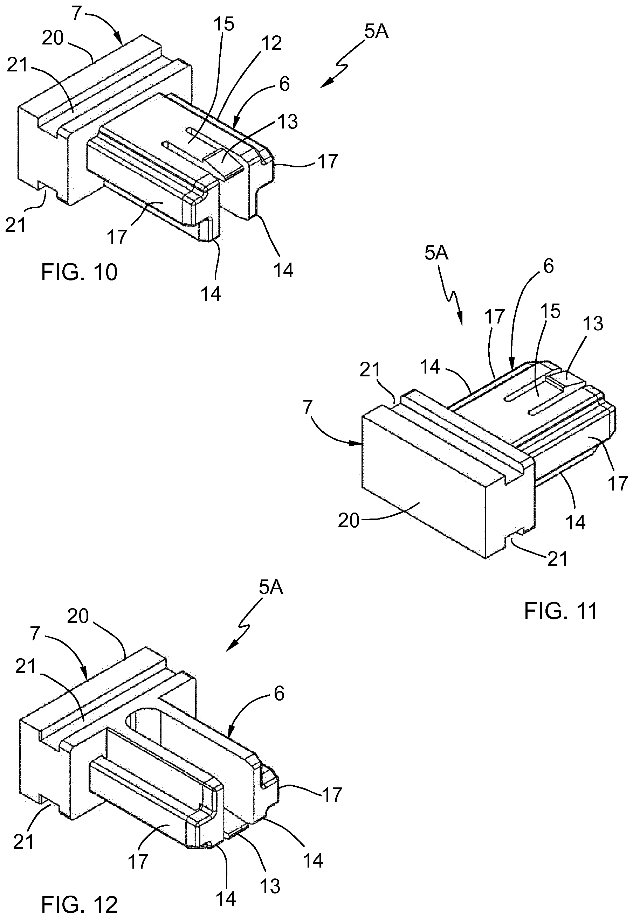

Figures 10 to 12 show in greater detail the first joining piece 5A, comprising a first side 6 formed for snap fitting in the end of the crosspiece 3 and a second side 7 formed for snap fitting in the inner side 4 of the side rail 2.

The first side 6 of the first joining piece 5A comprises a dowel 12 having a shape complementary to the inner perimeter of the crosspieces 3. The dowel 12 is formed by two facing arms 14 extending in the longitudinal direction of said dowel 12 and a central tab 15 extending in cantilever fashion between said arms 14. A tooth 13 is formed at one end of the central tab 15. Each of these two arms 14 comprises a rib 17 protruding laterally from said arm 14.

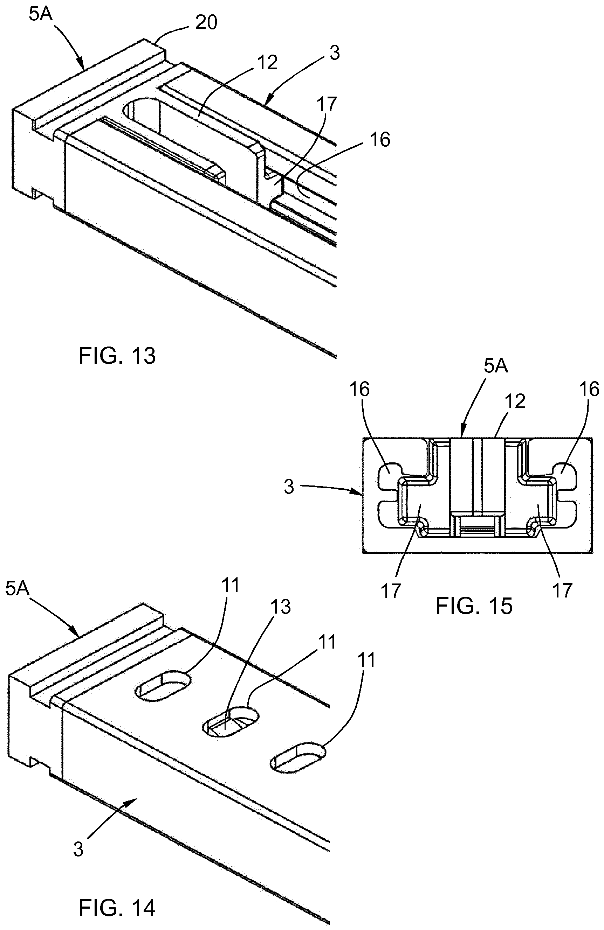

It can be seen in Figures 13 to 15 how the dowel 12 of the first side 6 of the first joining piece 5A snap fits in the end of a crosspiece 3. The dowel 12 is tightly introduced inside the crosspiece 3 at the end of said crosspiece 3 and in the longitudinal direction thereof, such that the two ribs 17 are tightly introduced in the inner side tracks 16 and the tooth 13 is snapped into one of the through holes 11.

Going back to Figures 10 to 12, the specific shape of the second side 7 of the first joining piece 5A for snap fitting in the inner side 4 of the side rail 2 in an orthogonal direction with respect to the longitudinal direction of said side rail 2 can be seen. The second side 7 comprises a cuboid shaped block 20 having on its outer surface two transverse grooves 21, arranged in one and the same plane on opposite sides of said block 20.

It can be seen in Figure 4 how the second side 7 of the first joining piece 5A snap fits in the inner side 4 of the side rail 2. The block 20 is introduced under pressure in the channel 18 through one of the openings 19, and said block 20 is retained in said channel 18 as a result of the latter having a projection 22 which is introduced in the transverse groove 21 in the lower surface of the block 20. It will be observed that as a result of the two grooves 21 being arranged in one and the same plane and both being suitable for receiving the projection 22, it is possible to turn the first joining piece 5A over, and in this turned-over position the block 20 can likewise be introduced under pressure in the channel 18 through the opening 19. The projection 22 is then introduced in the other transverse groove 21 which, in the turned-over position is in a lower position. The two normal and turned-over positions of the joining piece 5A are shown respectively in Figures 10 and 12.

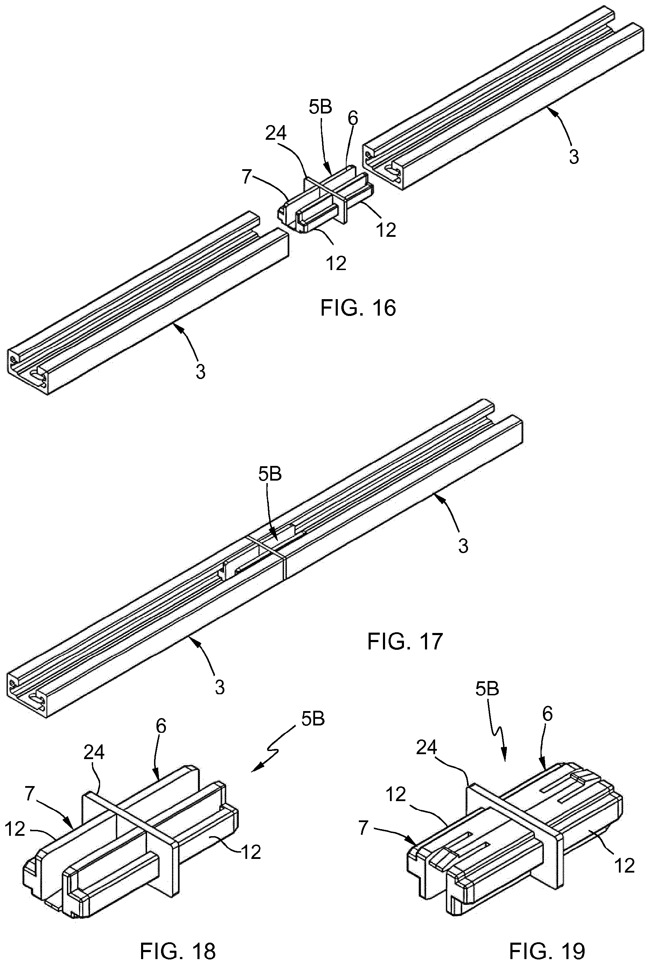

Figure 16 and 17 show a second embodiment, in which two aligned crosspieces 3 are joined to one another at their ends and by fitting through a second joining piece 5B. The two crosspieces 3 are identical to those described above for the first embodiment, except eventually their length. Both the first side 6 and the second side 7 of this second joining piece 5B are formed for snap fitting in the end of a crosspiece 3. As can be seen in Figures 18 and 19, the first side 6 and the second side 7 of the joining piece 5B are equal to one another, and they are equal to the first side 6 of the first joining piece 5A described above. Between the two dowels 12 of the first side 6 and of the second side 7, respectively, there is arranged a partition 24 protruding from the perimeter of said two dowels 12. The manner in which each of the two dowels 12 is introduced in the end of a crosspiece 3 is the same as the manner described above for the first embodiment. The partition 24 acts as a stop for the introduction of each dowel 12 at the end of a crosspiece 3.

Using this second embodiment, for example a cable ladder 1 (not depicted) like that shown in Figure 1 can be constructed, but in which the crosspieces attaching the two side rails 2 are composite crosspieces like in Figure 17, formed by two crosspieces 3 aligned and joined at their ends and by snap fitting through a second joining piece 5B.

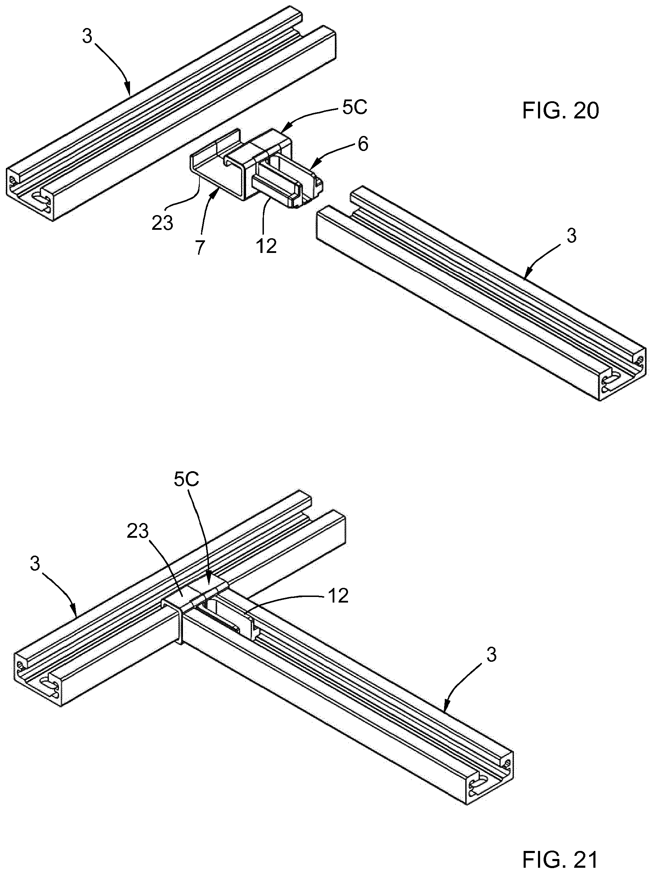

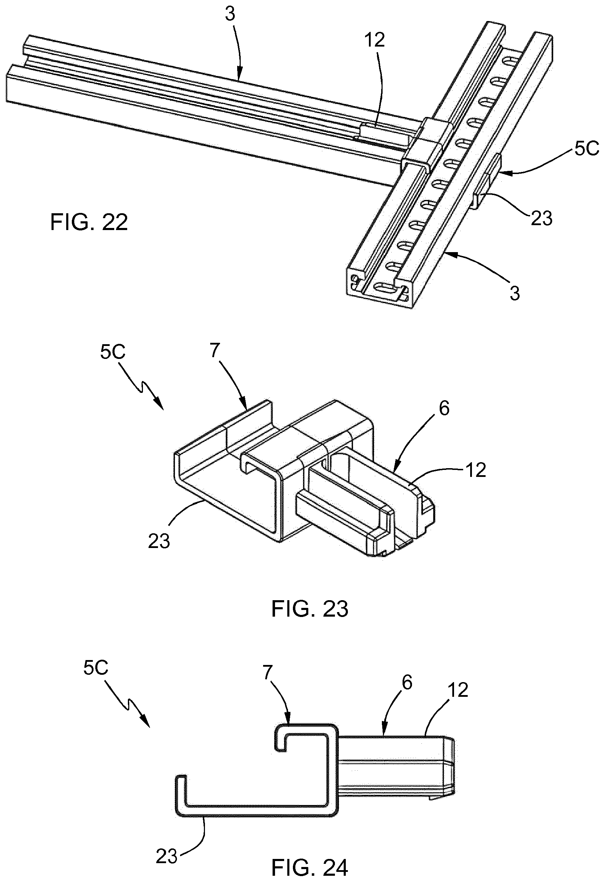

Figures 20 to 22 show a third embodiment, in which two crosspieces 3 arranged orthogonally are joined to one another and by snap fitting through a third joining piece 5C. The two crosspieces 3 are identical to those described above for the first embodiment, except eventually in length. The second side of this third joining piece 5C is formed for snap fitting in a central segment of a crosspiece 3 in an orthogonal direction with respect to the longitudinal direction of said crosspiece 3. As can be seen in Figures 23 and 24, the second side 7 of the third joining piece 5C comprises a grip 23 formed by a bent plate having a complementary shape of the outer surface of the crosspiece 3, such that when the second side 7 is snap fit in said crosspiece 3 as shown in Figures 21 and 22, said bent plate is adjoined to the outer surface of the crosspiece 3. The first side 6 of this third joining piece 5C is equal to the first side 6 of the first joining piece 5A described above. The manner in which the dowel 12 of the first side 6 is introduced in the end of a crosspiece 3 is the same as that described above for the first embodiment. It can be observed that the shape of the second side 7 of the third joining piece 5C is such that it fits in any position along the crosspiece 3. Other embodiments (not depicted) are possible in which the second side 7 of the joining piece is formed such that it cooperates with a singular element formed in the crosspiece 3, such that it can fit only in certain positions along the crosspiece 3. For example, the second side 7 can have a shape like that of the third joining piece 5C but with a tooth intended for cooperating with one of the through holes 11 of the crosspiece 3.

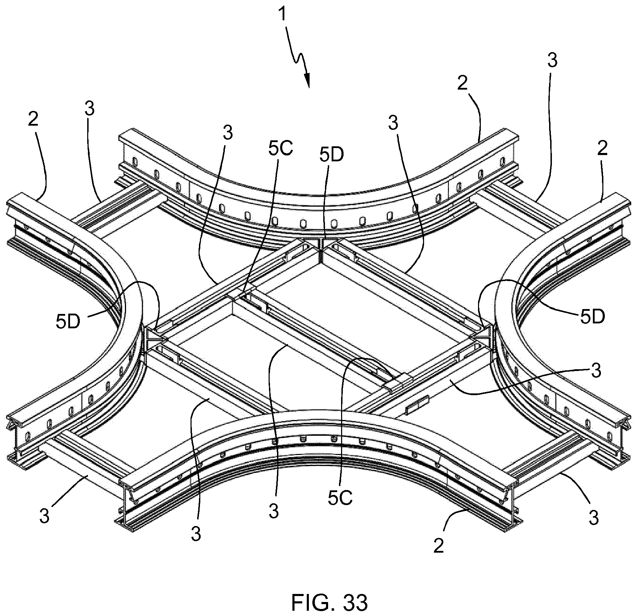

Using this third embodiment, a cable ladder 1 for example like that shown in Figure 33 can be constructed, forming an X-crossing. It is also possible to build crossings with different, non-orthogonal angles, modifying to that end the angles of the different joining pieces.

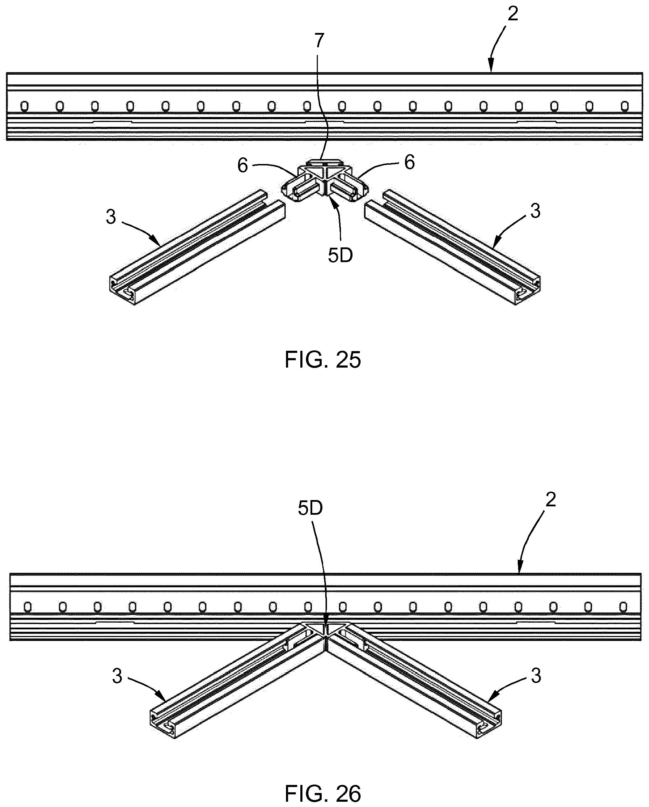

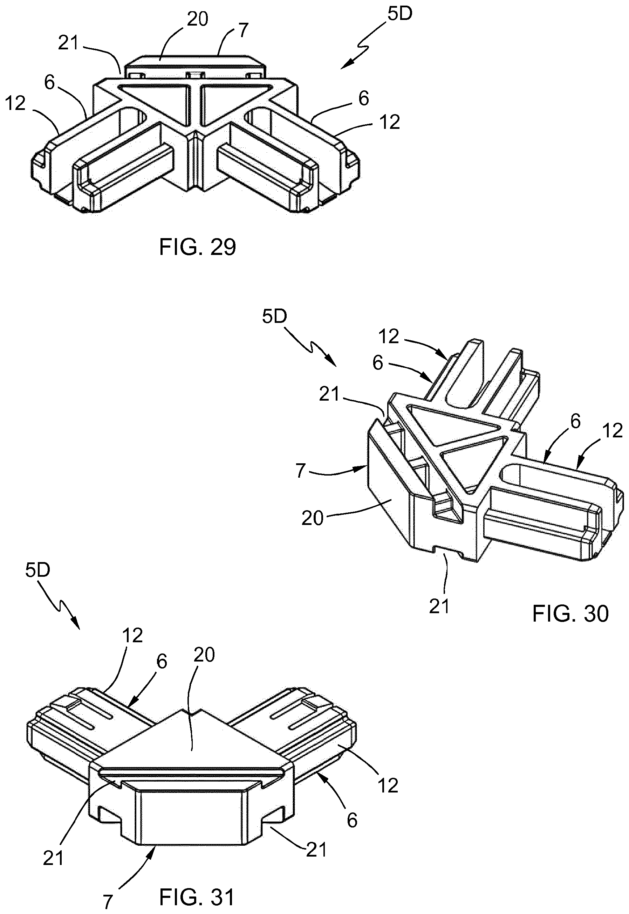

Figures 25 and 26 show a fourth embodiment, in which two coplanar crosspieces 3 forming an angle are joined to a straight side rail 2 at one and the same point and by snap fitting through a fourth joining piece 5D. In the depicted example the angle formed by the two crosspieces 3 is 90°, and the angle formed by each crosspiece 3 with the side rail 2 is 45°. The side rail 2 and the two crosspieces 3 are identical to those described above for the first embodiment, except eventually in length. As can be seen in Figures 29 to 31, the fourth joining piece 5D has a first side 6 comprising two dowels 12 forming an angle with respect to one another. In the depicted example the angle formed by the two dowels 12 is 90°. These two dowels 12 are identical to one another, and are identical to dowel 12 of the first joining piece 5A described above. The manner in which each of the two dowels 12 of the first side 6 is introduced in the end of a crosspiece 3 is the same as that described above for the first embodiment. The second side 7 of the fourth joining piece 5D has a shape similar to that of the second side 7 of the first joining piece 5A described above: it comprises a block 20 having on its outer surface two transverse grooves 21 arranged in one and the same plane on opposite sides of said block 20. In this case the block 20 is a cuboid which is turned 45° with respect to the longitudinal direction of the side rail 2 and the vertex opposite the dowels 12 is truncated. Otherwise, the manner in which the block 20 is introduced in an opening 19 of the channel 18 of the inner side of the side rail 2 for snap fitting therein, such that the projection 22 is introduced in the transverse groove 21, is the same as that described above for the first embodiment.

Using this fourth embodiment, for example a cable ladder 1 (not depicted) can be constructed like that shown in Figure 1, but in which the crosspieces 3 attaching the two side rails 2 are arranged forming an 90° angle between one another and a 45° angle with the side rails 2, and such that two crosspieces 3 are joined at one and the same point of a side rail 2 by snap fitting through the fourth joining piece 5D.

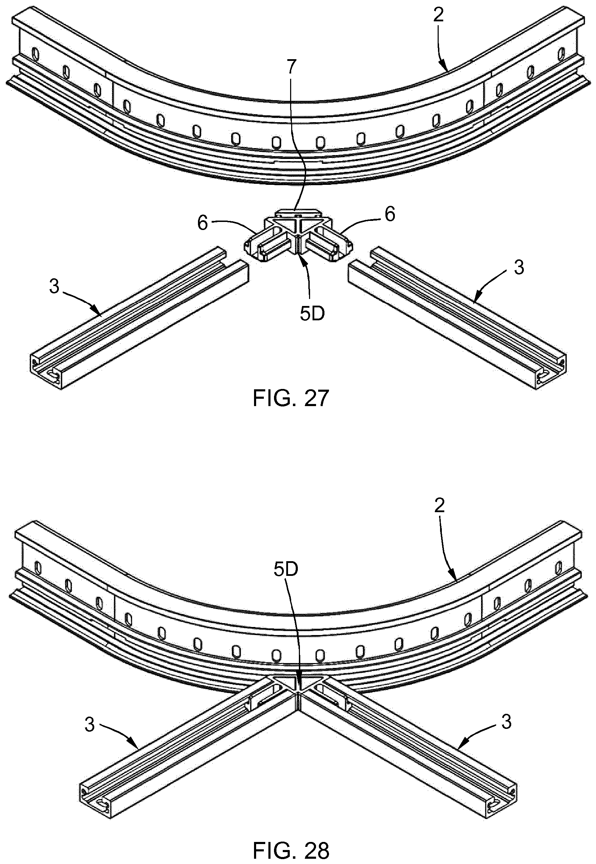

Figures 27 and 28 show a variant of the fourth embodiment which differs from same only in that the side rail 2 is curved. For attaching the crosspieces 3 to the curved side rail 2 the same fourth joining pieces 5D are used in the same manner as in the fourth embodiment described above.

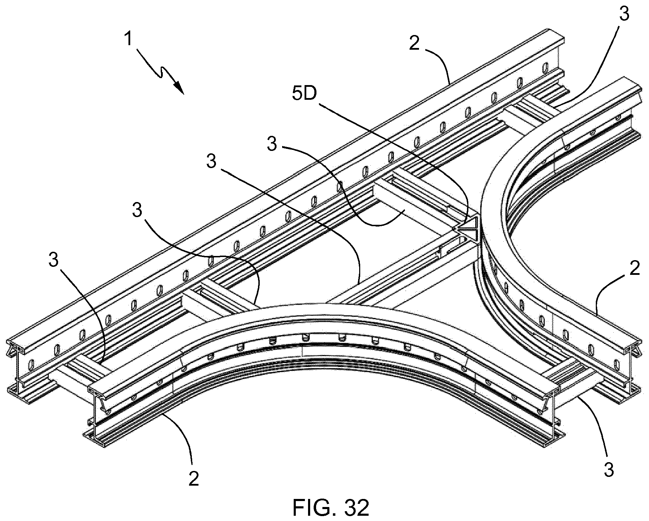

Using this variant of the fourth embodiment, for example a cable ladder 1 like that shown in Figure 32, forming a T-joint, and also a cable ladder 1 like that shown in Figure 33, forming an X-crossing, can be constructed.

There are other possible embodiments (not depicted) in which both the first side 6 and the second side 7 of the joining piece are each formed for snap fitting in the ends of two crosspieces 3 arranged coplanar and forming an angle with respect to one another. For example, in said embodiments both the first side 6 and the second side 7 of the joining piece can be like the first side 6 of the fourth joining piece 5D depicted in Figures 29 to 31. Using these embodiments, a cable ladder 1 can be constructed in which the four crosspieces 3 are joined at their ends to one and the same joining piece. In a variant of said embodiments, the second side 7 of the joining piece is formed for snap fitting in the end of a single crosspiece. For example, in said variants the second side 7 of the joining piece can be like the first side 6 or the second side 7 of the second joining piece 5B depicted in Figures 18 and 19.

In all the described embodiments, both the side rails 2 and the crosspieces 3 as well as the joining pieces 5A, 5B, 5C, 5D are made of a polymeric material, preferably an electrically insulating material, such as for example PVC (polyvinyl chloride) with a surface resistivity greater than 100 MΩ (surface resistivity measured according to standard EN 62631-3-2:2016). The polymeric material constituting side rails 2, crosspieces 3, and joining pieces 5A, 5B, 5C, 5D can be different. However, preferably all these components of the cable ladder are made from the same polymeric material. The side rails 2 and the crosspieces 3 are profiles, preferably extruded profiles. The joining pieces 5A, 5B, 5C, 5D are molded parts.

## Claims

1. A cable ladder (1), comprising two coplanar side rails (2) joined to one another by a plurality of crosspieces (3) spaced from one another, said plurality of crosspieces (3) constituting a discontinuous support surface for cables, in which each of said crosspieces (3) is a profile made of a polymeric material and each of said side rails (2) is a profile made of a polymeric material, and wherein the ends of said crosspieces (3) fit in an inner side (4) of said side rails (2) facing an inner side (4) of an opposite side rail (2), **characterized in that** it comprises at least one joining piece (5A, 5B, 5C, 5D), wherein an end of one of said crosspieces (3) is joined by fitting through said joining piece (5A, 5B, 5C, 5D) to another element of said cable ladder (1) from among those of a group formed by said side rails (2) and said crosspieces (3), said joining piece (5A, 5B, 5C, 5D) being molded from polymeric material and comprising a first side (6), formed for snap fitting in said end of the crosspiece (3) which is joined by fitting through said joining piece (5A, 5B, 5C, 5D) to said element of said cable ladder (1), and a second side (7) formed for snap fitting in said other element of the cable ladder (1).

2. The cable ladder (1) according to claim 1, **characterized in that** said first side (6) of the joining piece (5A, 5B, 5C, 5D) comprises a dowel (12) having a shape complementary to the inner perimeter of the crosspieces (3), such that said dowel (12) is tightly introduced inside a crosspiece (3), at the end of said crosspiece (3) and in the longitudinal direction thereof.

3. The cable ladder (1) according to claim 2, wherein said crosspieces (3) comprise through holes (11) distributed along the crosspiece (3), **characterized in that** said dowel (12) comprises a tooth (13) which is snapped into one of said through holes (11) of the crosspiece (3).

4. The cable ladder (1) according to claim 3, **characterized in that** said dowel (12) is formed by two facing arms (14) extending in the longitudinal direction of said dowel (12) and a central tab (15) extending in cantilever fashion between said arms (14), said tooth (13) being arranged in said central tab (15).

5. The cable ladder (1) according to claim 4, wherein said crosspieces (3) have a C-shaped cross-section with a web (8) and two facing flanges (9), said flanges (9) demarcating between them an open side (10) of the crosspiece (3) opposite said web (8), and where the two flanges (9) of said crosspieces (3) are bent towards the inside of the crosspiece (3) forming respective inner side tracks (16), **characterized in that** each of said arms (14) of the first side (6) of the joining piece (5A, 5B, 5C, 5D) comprises a rib (17) protruding laterally from said arm (14), said ribs (17) being formed such that they are tightly introduced in said inner side tracks (16).

6. The cable ladder (1) according to any one of claims 1 to 5, **characterized in that** said second side (7) of the joining piece (5A, 5D) is formed for snap fitting in the inner side (4) of a side rail (2) in an orthogonal direction with respect to the longitudinal direction of said side rail (2), such that through said joining piece (5A, 5D) the end of a crosspiece (3) is joined to the inner side (4) of a side rail (2) by snap fitting.

7. The cable ladder (1) according to claim 6, wherein the inner side (4) of said side rails (2) comprises a channel (18) and a plurality of openings (19) spaced apart from one another along the longitudinal direction of said side rails (2), **characterized in that** said second side (7) of the joining piece (5A, 5D) comprises a block (20) having on its outer surface at least one transverse groove (21), said block (20) being formed such that it is introduced under pressure in said channel (18) through one of said openings (19), and said channel (18) comprises a projection (22) which is introduced in said transverse groove (21) of the block (20).

8. The cable ladder (1) according to claim 7, **characterized in that** said block (20) comprises two of said transverse grooves (21), arranged in one and the same plane on opposite sides of said block (20).

9. The cable ladder (1) according to any one of claims 1 to 8, **characterized in that** said first side (6) of the joining piece (5D) is formed for snap fitting in the ends of two crosspieces (3) arranged coplanar and forming an angle with respect to one another.

10. The cable ladder (1) according to claim 9, **characterized in that** said first side (6) of the joining piece (5D) comprises two dowels (12) forming an angle with respect to one another, each of said dowels (12) having a shape complementary to the inner perimeter of a crosspiece (3), such that each of said dowels (12) is tightly introduced inside a crosspiece (3), at the end of said crosspiece (3) and in the longitudinal direction thereof.

11. The cable ladder (1) according to any one of claims 1 to 5, **characterized in that** each of said first side (6) and second side (7) of the joining piece (5B) is formed for snap fitting in the end of a crosspiece (3), such that through said joining piece (5B) the ends of two of said crosspieces (3) aligned with one another are joined by fitting.

12. The cable ladder (1) according to claim 11, **characterized in that** each of said first side (6) and second side (7) of the joining piece (5B) comprises a dowel (12) having a shape complementary to the inner perimeter of the crosspieces (3), such that said dowel (12) is tightly introduced inside a crosspiece (3), at the end of said crosspiece (3) and in the longitudinal direction thereof, and said joining piece (5) comprises a partition (24) arranged between the two dowels (12) of the first side (6) and of the second side (7), said partition (24) protruding from the perimeter of said two dowels (12).

13. The cable ladder (1) according to any one of claim 11 or 12, **characterized in that** said first side (6) and second side (7) of the joining piece (5B) are equal to one another.

14. The cable ladder (1) according to any one of claims 1 to 5, **characterized in that** said second side (7) of the joining piece (5C) is formed for snap fitting in a crosspiece (3) in an orthogonal direction with respect to the longitudinal direction of said crosspiece (3), such that through said joining piece (5C) the end of a first crosspiece (3) is joined to a central segment of a second crosspiece (3) arranged orthogonally to said first crosspiece (3) by fitting.

15. The cable ladder (1) according to claim 14, **characterized in that** said second side (7) of the joining piece (5C) comprises a grip (23) encircling the outer surface of said second crosspiece (3), said grip being formed by a bent plate which is adjoined to said outer surface of the second crosspiece (3).

## Patentansprüche

1. Eine Kabelleiter (1), aufweisend zwei komplanare Seitenholme (2), die durch eine Vielzahl an voneinander beanstandeten Querstücken (3) miteinander verbunden sind, wobei die Vielzahl an Querstücken (3) eine diskontinuierliche Auflagefläche für Kabel bildet, in der jede der Querstücke (3) ein aus einem polymeren Material hergestelltes Profil ist und jede der Seitenholme (2) ein aus einem polymeren Material hergestelltes Profil ist, und wobei die Enden der Querstücke (3) in eine Innenseite (4) der Seitenholme (2) passen, die einer inneren Seite (4) eines gegenüber liegenden Seitenholmes (2) zugewandt sind, **dadurch gekennzeichnet, dass** die Kabelleiter mindestens ein Verbindungsstück (5A, 5B, 5C, 5D) aufweist, wobei ein Ende einer der Querstücke (3) verbunden ist durch Durchstecken des Verbindungsstücks (5A, 5B, 5C, 5D) zu einem anderen Element der Kabelleiter (1) aus einer durch die Seitenholme (2) und die Querstücken (3) gebildeten Gruppe, wobei das Verbindungsstück (5A, 5B, 5C, 5D) aus polymerem Material geformt ist und eine erste Seite (6) aufweist, die zur Schnappbefestigung in dem Ende der Quertraverse (3) ausgebildet ist, welche durch Durchstecken von dem Verbindungsstück (5A, 5B, 5C, 5D) zu dem Element der Kabelleiter (1) verbunden ist, und eine zweite Seite (7), die zur Schnappbefestigung in dem anderen Element der Kabelleiter (1) ausgebildet ist.

2. Die Kabelleiter (1) nach Anspruch 1, **dadurch gekennzeichnet, dass** die erste Seite (6) des Verbindungsstücks (5A, 5B, 5C, 5D) ein Passstift (12) aufweist, das eine zum inneren Perimeter des Querstücks (3) komplementäre Form aufweist, sodass der Passstift (12) enganliegend in ein Querstück (3) am Ende des Querstücks (3) und in deren longitudinale Richtung eingefügt wird.

3. Die Kabelleiter (1) nach Anspruch 2, wobei die Querstücke (3) entlang der Querstücke (3) verteilte Durchgangslöcher (11) aufweisen, **dadurch gekennzeichnet, dass** der Passstift (12) einen Zahn (13) aufweist, der in eines der Durchgangslöcher (11) des Querstücks (3) eingeschnappt ist.

4. Die Kabelleiter (1) nach Anspruch 3, **dadurch gekennzeichnet, dass** der Passstift (12) durch zwei gegenüberliegende Arme (14), die sich in die longitudinale Richtung des Passstifts (12) ausdehnen, und durch eine zentrale Lasche (15), die sich in Überhang zwischen die Arme (14) ausdehnt, wobei der Zahn (13) in der zentralen Lasche (15) angeordnet ist, gebildet wird.

5. Die Kabelleiter 1 nach Anspruch 4, wobei die Querstücke (3) einen C-förmigen Querschnitt mit einem Steg (8) und zwei gegenüberliegende Flansche (9) aufweisen, wobei die Flansche (9) eine dem Steg (8) gegenüberliegende offene Seite (10) des Querstücks (3) zwischen ihnen abgrenzen, und wo die beiden Flansche (9) der Querstücke (3) in das Innere des Querstücks (3) gebogen sind, wobei diese jeweils innere seitliche Schienen (16) bilden, **dadurch gekennzeichnet, dass** jede der Arme (14) der ersten Seite (6) der Verbindungstücke (5A, 5B, 5C, 5D) eine Rippe (17) aufweist, die von dem Arm (14) seitlich vorsteht, wobei die Rippen (17) dahingehend geformt sind, dass diese enganliegend in die inneren Seitenschienen (16) eingefügt werden.

6. Die Kabelleiter (1) nach einem der Ansprüche 1 bis 5, **dadurch gekennzeichnet, dass** die zweite Seite (7) des Verbindungsstücks (5A, 5D) zur Schnappbefestigung in der inneren Seite (4) eines Steinholmes (2) in einer orthogonalen Richtung in Bezug zur longitudinalen Richtung des Seitenholmes (2) ausgebildet ist, sodass durch das Verbindungsstück (5A, 5D) das Ende eines Querstücks (3) zu der inneren Seite (4) eines Seitenholmes (2) durch Schnappbefestigung verbunden ist.

7. Die Kabelleiter (1) nach Anspruch 6, wobei die innere Seite (4) der Seitenholme (2) einen Kanal (18) und eine Vielzahl an Öffnungen (19), welche entlang der longitudinalen Richtung der Seitenholme (2) voneinander beabstandet sind, aufweist, **dadurch gekennzeichnet, dass** die zweite Seite (7) des Verbindungsstücks (5A, 5D) einen auf seiner äußeren Oberfläche mindestens eine transversale Nut (21) aufweisenden Block (20) aufweist, wobei der Block (20) dahingehend geformt ist, dass er unter Druck in den Kanal (18) durch eine der Öffnungen (19) eingefügt werden kann, und der Kanal (18) einen Vorsprung (22) aufweist, der in die transversale Nut (21) des Blocks (20) eingefügt ist.

8. Die Kabelleiter (1) nach Anspruch 7, **dadurch gekennzeichnet, dass** der Block (20) zwei der transversalen Nuten (21) aufweist, die in ein und derselben Ebene auf gegenüberliegenden Seiten des Blocks (20) angeordnet sind.

9. Die Kabelleiter (1) nach einem der Ansprüche 1 bis 8, **dadurch gekennzeichnet, dass** die erste Seite (6) des Verbindungsstücks (5D) zur Schnappbefestigung an den Enden von zwei Querstücken (3), die komplanar angeordnet sind und einen Winkel zwischen sich bilden, ausgebildet ist.

10. Die Kabelleiter (1) nach Anspruch 9, **dadurch gekennzeichnet, dass** die erste Seite (6) des Verbindungsstücks (5D) zwei Passstifte (12) aufweist, die einen Winkel zwischen sich bilden, wobei jeder der Passstifte (12) eine zum inneren Perimeter eines Querstücks (3) komplementäre Form hat, sodass jeder der Passstifte (12) enganliegend in eines Querstücks (3) eingefügt wird, in das Ende des Querstücks (3) und in deren longitudinale Richtung.

11. Die Kabelleiter (1) nach einem der Ansprüche 1 bis 5, **dadurch gekennzeichnet, dass** jede der ersten Seite (6) und zweiten Seite (7) des Verbindungsstücks (5B) ausgebildet ist zur Schnappbefestigung an dem Ende eines Querstücks (3), sodass durch das Verbindungsstück (5B) die Enden von zwei der Querstücke (3), die zueinander ausgerichtet sind, durch Einpassen verbunden werden.

12. Die Kabelleiter (1) nach Anspruch 11, **dadurch gekennzeichnet, dass** jede der ersten Seite (6) und zweiten Seite (7) des Verbindungsstücks (5B) ein Passstift (12) aufweist, das eine zum inneren Perimeter der Querstücken (3) komplementäre Form aufweist, sodass der Passstift (12) enganliegend in eines Querstücks (3), am Ende des Querstücks (3) und in deren longitudinale Richtung, eingefügt wird, und das Verbindungsstück (5) eine Abtrennung (24) aufweist, die zwischen den beiden Passstiften (12) der ersten Seite (6) und der zweiten Seite (7) angeordnet ist, wobei die Abtrennung (24) sich von dem Perimeter der zwei Passstifte (12) vorsteht.

13. Die Kabelleiter (1) nach einem der Ansprüche 11 oder 12, **dadurch gekennzeichnet, dass** die erste Seite (6) und zweite Seite (7) des Verbindungsstücks (5B) gleich zueinander sind.

14. Die Kabelleiter (1) nach einem der Ansprüche 1 bis 5, **dadurch gekennzeichnet, dass** die zweite Seite (7) des Verbindungsstücks (5C) ausgebildet ist zur Schnappverbindung in eines Querstücks (3) in eine orthogonale Richtung in Bezug zur longitudinalen Richtung des Querstücks (3), sodass durch das Verbindungsstück (5C) das Ende eines ersten Querstücks (3) mit einem zentralen Segment eines zweiten Querstücks (3), das orthogonal zur ersten Querstück (3) angeordnet ist, durch Einpassen verbunden wird.

15. Die Kabelleiter (1) nach Anspruch 14, **dadurch gekennzeichnet, dass** die zweite Seite (7) des Verbindungsstücks (5C) einen die äußere Oberfläche der zweiten Querstück (3) umlaufenden Haltegriff (23) aufweist, wobei der Haltegriff durch eine gebogene Platte ausgebildet ist, die an der äußeren Oberfläche der zweiten Querstück (3) angrenzt.

## Revendications

1. Échelle à câbles (1) comprenant deux rails latéraux coplanaires (2) assemblés entre eux par une pluralité de traverses (3) espacées les unes des autres, ladite pluralité de traverses (3) constituant une surface de support discontinue pour les câbles, dans laquelle chacune desdites traverses (3) est un profilé composé d'un matériau polymère et chacun desdits rails latéraux (2) est un profilé composé d'un matériau polymère, et dans laquelle les extrémités desdites traverses (3) s'ajustent dans un côté intérieur (4) desdits rails latéraux (2) faisant face à un côté intérieur(4) d'un rail latéral (2) opposé, **caractérisée en ce qu'**elle comprend au moins une pièce de liaison (5A, 5B, 5C, 5D), dans laquelle une extrémité de l'une desdites traverses(3) est assemblée par ajustement par le biais de ladite pièce de liaison (5A, 5B, 5C, 5D) à un autre élément de ladite échelle à câbles (1) parmi ceux d'un groupe formé par lesdits rails latéraux (2) et lesdites traverses(3), ladite pièce de liaison (5A, 5B, 5C, 5D) étant moulée à partir d'un matériau polymère et comprenant un premier côté (6) formé pour l'ajustement à pression dans ladite extrémité de la traverse (3) qui est assemblée par ajustement par le biais de ladite pièce de liaison (5A, 5B, 5C, 5D) audit élément de ladite échelle à câbles (1), et un second côté (7) formé pour l'ajustement à pression dans ledit autre élément de l'échelle à câbles (1).

2. Échelle à câbles (1) selon la revendication 1, **caractérisée en ce que** ledit premier côté (6) de la pièce de liaison (5A, 5B, 5C, 5D) comprend un goujon (12) ayant une forme complémentaire par rapport au périmètre interne des traverses (3), de sorte que ledit goujon (12) est introduit avec serrage à l'intérieur d'une traverse (3), à l'extrémité de ladite traverse (3) et dans sa direction longitudinale.

3. Échelle à câbles (1) selon la revendication 2, dans laquelle lesdites traverses (3) comprennent des trous débouchants (11) répartis le long de la traverse (3), **caractérisée en ce que** ledit goujon (12) comprend une dent (13) qui est encliquetée dans l'un desdits trous débouchants (11) de la traverse (3).

4. Échelle à câbles (1) selon la revendication 3, **caractérisée en ce que** ledit goujon (12) est formé par deux bras en vis-à-vis (14) s'étendant dans la direction longitudinale dudit goujon (12) et une languette centrale (15) s'étendant en porte-à-faux entre lesdits bras (14), ladite dent (13) étant agencée dans ladite languette centrale (15).

5. Échelle à câbles (1) selon la revendication 4, dans laquelle lesdites traverses (3) ont une section transversale en forme de C avec une âme (8) et deux ailes en vis-à-vis (9), lesdites ailes (9) délimitant entre elles un côté ouvert (10) de la traverse (3) opposé à ladite âme (8), et dans laquelle les deux ailes (9) desdites traverses (3) sont pliées vers l'intérieur de la traverse (3) formant des voies latérales (16) respectives, **caractérisée en ce que** chacun desdits bras (14) du premier côté (6) de la pièce de liaison (5A, 5B, 5C, 5D) comprend une nervure (17) faisant saillie latéralement à partir dudit bras (14), lesdites nervures (17) étant formées de sorte qu'elles sont introduites avec serrage dans lesdites voies latérales internes (16) .

6. Échelle à câbles (1) selon l'une quelconque des revendications 1 à 5, **caractérisée en ce que** ledit second côté (7) de la pièce de liaison (5A, 5D) est formé pour l'ajustement à pression dans le côté intérieur(4) d'un rail latéral (2) dans une direction orthogonale par rapport à la direction longitudinale dudit rail latéral (2), de sorte que par le biais de ladite pièce de liaison (5A, 5D), l'extrémité d'une traverse (3) est assemblée au côté intérieur (4) d'un rail latéral (2) par ajustement à pression.

7. Échelle à câbles (1) selon la revendication 6, dans laquelle le côté intérieur (4) desdits rails latéraux (2) comprend un canal (18) et une pluralité d'ouvertures (19) espacées les unes des autres le long de la direction longitudinale desdits rails latéraux (2), **caractérisée en ce que** ledit second côté (7) de la pièce de liaison (5A, 5D) comprend un bloc (20) ayant, sur sa surface externe, au moins une rainure transversale (21), ledit bloc (20) étant formé de sorte qu'il est introduit sous pression dans ledit canal (18) à travers l'une desdites ouvertures (19), et ledit canal (18) comprend une saillie (22) qui s'introduit dans ladite rainure transversale (21) du bloc (20).

8. Échelle à câbles (1) selon la revendication 7, **caractérisée en ce que** ledit bloc (20) comprend deux desdites rainures transversales (21), agencées dans un seul et même plan sur les côtés opposés dudit bloc (20).

9. Échelle à câbles (1) selon l'une quelconque des revendications 1 à 8, **caractérisée en ce que** ledit premier côté (6) de la pièce de liaison (5D) est formé pour l'ajustement à pression dans les extrémités de deux traverses (3) agencées de manière coplanaire et formant un angle l'une par rapport à l'autre.

10. Échelle à câbles (1) selon la revendication 9, **caractérisée en ce que** ledit premier côté (6) de la pièce de liaison (5D) comprend deux goujons (12) formant un angle l'un par rapport à l'autre, chacun desdits goujons (12) ayant une forme complémentaire par rapport au périmètre interne d'une traverse (3), de sorte que chacun desdits goujons (12) est introduit avec serrage à l'intérieur d'une traverse (3), à l'extrémité de ladite traverse (3) et dans sa direction longitudinale.

11. Échelle à câbles (1) selon l'une quelconque des revendications 1 à 5, **caractérisée en ce que** chacun parmi lesdits premier côté (6) et second côté (7) de la pièce de liaison (5B) est formé pour l'ajustement à pression dans l'extrémité d'une traverse (3), de sorte que par le biais de ladite pièce de liaison (5B), les extrémités de deux desdites traverses (3) alignées entre elles sont assemblées par ajustement.

12. Échelle à câbles (1) selon la revendication 11, **caractérisée en ce que** chacun parmi lesdits premier côté (6) et second côté (7) de la pièce de liaison (5B) comprend un goujon (12) ayant une forme complémentaire par rapport au périmètre interne des traverses (3), de sorte que ledit goujon (12) est introduit avec serrage à l'intérieur d'une traverse (3), à l'extrémité de ladite traverse (3) et dans sa direction longitudinale, et ladite pièce de liaison (5) comprend une cloison (24) agencée entre les deux goujons (12) du premier côté (6) et du second côté (7), ladite cloison (24) faisant saillie du périmètre desdits deux goujons (12).

13. Échelle à câbles (1) selon l'une quelconque des revendications 11 ou 12, **caractérisée en ce que** lesdits premier côté (6) et second côté (7) de la pièce de liaison (5B) sont égaux entre eux.

14. Échelle à câbles (1) selon l'une quelconque des revendications 1 à 5, **caractérisée en ce que** ledit second côté (7) de la pièce de liaison (5C) est formé pour l'ajustement à pression dans une traverse (3) dans une direction orthogonale par rapport à la direction longitudinale de ladite traverse (3), de sorte que par le biais de ladite pièce de liaison (5C), l'extrémité d'une première traverse (3) est assemblée par ajustement à un segment central d'une seconde traverse(3) agencée orthogonalement à ladite première traverse(3).

15. Échelle à câbles (1) selon la revendication 14, **caractérisée en ce que** ledit second côté (7) de la pièce de liaison (5C) comprend une griffe (23) encerclant la surface externe de ladite seconde traverse (3), ladite griffe étant formée par une plaque pliée qui est attenante à ladite surface externe de ladite seconde traverse (3).
